# EUROPEAN PATENT SPECIFICATION

(11) **EP 4 429 230 B1**
(45) Date of publication and mention of the grant of the patent: **04.11.2026**
(21) Application number: 22894902.0
(22) Date of filing: 17.11.2022
(51) Int. Cl.: H04L 65/401, H04L 65/402, H04L 65/1016, H04L 65/1069, H04L 65/1104, H04N 7/14

(54) **CALL METHOD AND SYSTEM, ELECTRONIC DEVICE AND COMPUTER-READABLE STORAGE MEDIUM**
ANRUFVERFAHREN UND -SYSTEM, ELEKTRONISCHE VORRICHTUNG UND COMPUTERLESBARES SPEICHERMEDIUM
SYSTÈME ET PROCÉDÉ D'APPEL, DISPOSITIF ÉLECTRONIQUE ET SUPPORT D'INFORMATIONS LISIBLE PAR ORDINATEUR

(30) Priority: 19.11.2021 CN 202111401823
(43) Date of publication of application: 11.09.2024
(73) Proprietor: ZTE Corporation, Shenzhen, Guangdong 518057 (CN)
(72) Inventor: YANG, Haicheng, Shenzhen, Guangdong 518057 (CN); ZHOU, Jinxing, Shenzhen, Guangdong 518057 (CN)
(74) Representative: Ipsilon
(86) International application number: PCT/CN2022/132581
(87) International publication number: WO 2023/088371

(56) References cited:
- WO-A1-2016/156256
- WO-A1-2017/071309
- CN-A- 105 227 892
- KR-A- 20070 104 197
- US-B2- 9 420 440
- "3rd Generation Partnership Project; Technical Specification Group Services and System Aspects; IP Multimedia Subsystem (IMS); Multimedia Telephony; Media handling and interaction (Release 16)", vol. SA WG4, no. V16.8.2, 18 January 2021 (2021-01-18), pages 1 - 445, XP051999885, Retrieved from the Internet <URL:https://ftp.3gpp.org/Specs/latest/Rel-16/26_series/26114-g82.zip 26114-g82.doc> [retrieved on 20210118]
- "Video Share", 15 May 2011 (2011-05-15), XP055065938, Retrieved from the Internet <URL:http://en.wikipedia.org/w/index.php?title=Video_Share&oldid=429218656> [retrieved on 20130610]
- ERICSSON LM: "pCR AR two-party conversational services", 3GPP DRAFT; S4-211199, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG4, no. Electronic Meeting; 20210818 - 20210827, 27 August 2021 (2021-08-27), Mobile Competence Centre ; 650, route des Lucioles ; F-06921 Sophia-Antipolis Cedex ; France, XP052064428

## Description

### TECHNICAL FIELD

The present disclosure relates to the technical field of communications.

### BACKGROUND

Due to instability, interference, position shielding and the like of a wireless network, a user sometimes encounters the problems of low voice, discontinuity, no sound, noisy noise and the like during a call, making it hard for the user to acquire clear information from the call peer (i.e., the other party of the call).

3GPP TS 26.114 specification (XP051999885) discusses Multimedia Telephony Service for IMS (MTSI), and discloses that a terminal may establish a data channel with the network side data server.

"Video Share" from Wikipedia (XP055065938) introduces Video share technology, in which either party of a voice call may start a Video Share session to share something with the other party directly or through a Video Share Application Server.

US 9420 440 B2 discloses a calling method for use in a terminal configured to communicate with a device, comprising: establishing a data channel with the device when the terminal is conducting a call with the device through a voice channel, and exchanging interaction information with the device through the data channel.

WO 2016/156256A discloses a server and method for establishing a data communications channel between first and second communications terminal devices which are connected via a voice or video communications connection comprising a WebRTC voice or video channel to the first communications terminal device and a non-WebRTC voice or video channel to the second communications terminal device.

### SUMMARY

The present disclosure is defined in the appended claims.

### BRIEF DESCRIPTION OF DRAWINGS

FIG. 1 is a first flowchart of a call method according to an embodiment of the present disclosure;
FIG. 2 is a schematic diagram of devices connected by a data channel according to an embodiment of the present disclosure;
FIG. 3 is a schematic diagram of a human-machine interaction interface according to an embodiment of the present disclosure;
FIG. 4 is a second flowchart of a call method according to another embodiment of the present disclosure;
FIG. 5 is a third flowchart of a call method according to yet another embodiment of the present disclosure;
FIG. 6 is a first schematic diagram of a call device according to another embodiment of the present disclosure;
FIG. 7 is a second schematic diagram of a call device according to another embodiment of the present disclosure; and
FIG. 8 is a schematic structural diagram of an electronic device according to another embodiment of the present disclosure.

### DETAIL DESCRIPTION OF EMBODIMENTS

To make the objects, technical solutions and advantages of the embodiments of the present disclosure clearer, embodiments of the present disclosure will be described in detail below with reference to the accompanying drawings. However, it will be appreciated by those of ordinary skill in the art that numerous technical details are set forth in various embodiments of the present disclosure to provide a better understanding of the present disclosure. However, the technical solutions claimed in the present disclosure can be implemented even without these technical details or based on various changes and modifications based on the following embodiments. The following embodiments are divided for convenience of description, and should not constitute any limitation to the specific implementation of the present disclosure, and the embodiments may be mutually incorporated and referred to without contradiction.

An embodiment of the present disclosure relates to a call method applied to a first terminal such as a mobile phone, a tablet, or any other electronic device. The call method of this embodiment includes: the first terminal establishes a data channel with a data server when conducting an IMS call with a second terminal; collects in real time audio/video data; and transmits the collected audio/video data to the data server through the data channel, so that the data server obtains, according to the audio/video data, first multimedia data to be transmitted to the second terminal, and transmits the first multimedia data.

During the IMS call with the second terminal, the first terminal of the embodiment of the present disclosure establishes a data channel with the data server, and transmits audio/video data interacted with the second terminal to the server through the data channel; and the data server obtains multimedia data to be transmitted to the second terminal according to the audio/video data. Since the data server is usually a data server connected to a proximal end of the first terminal, the first terminal can also transmit multimedia data to the second terminal through the data server in the case of poor call quality, which ensures the transmission quality of call data between the two parties, and thus enables normal interaction of the terminals even if the wireless network is poor and ensures the call quality.

The implementation details of the call method according to this embodiment will be described in detail below, and the following description is provided merely for facilitating understanding of the implementation details, and is not necessary to implement the solution.

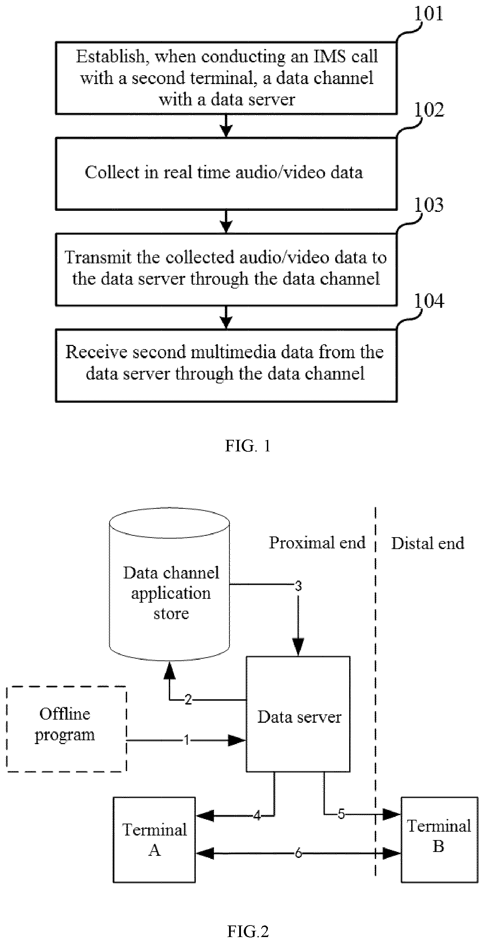

A specific flow of the call method of this embodiment applied to the first terminal may be as shown in FIG. 1, which includes the following operations 101 to 104.

At operation 101, establishing, when conducting an IMS call with a second terminal, a data channel with a data server.

The IMS call in this embodiment includes, but is not limited to: voice over new radio (VoNR), voice over long-term evolution (VoLTE), voice over WiFi (VoWiFi), or the like. In this embodiment, when conducting the IMS call with the second terminal, the first terminal also establishes a data channel with the data server to perform data transmission, thereby ensuring the call quality between the first terminal and the second terminal.

In some implementations, before the first terminal establishes the data channel with the data server, the first terminal further monitors an instruction sent from the second terminal; detects, according to the instruction, whether to establish the data channel; and proceeds to the operation of establishing the data channel with the data server under the condition that the instruction indicates to establish the data channel. In this embodiment, the first terminal may upload audio information of the first terminal to the data server in response to the instruction of the second terminal. Therefore, on the basis of ensuring that the second terminal can accurately receive call information from the first terminal, the first terminal can also respond to the call peer (i.e., the second terminal) in time to meet the call requirement of the call peer.

In some implementations, monitoring the instruction sent from the second terminal includes: monitoring session initiation protocol (SIP) signaling sent from the second terminal; and detecting, according to the instruction, whether to establish the data channel includes: determining whether to establish the data channel according to a dcmap field carried in the SIP signaling.

Illustratively, the second terminal may be understood as a call peer. The first terminal monitors SIP signaling sent from the call peer, parses a dcmap field in a session description protocol (SDP) offer (SDP offer) message therein, to determine whether to establish the data channel.

According to the 3GPP TS 26.114 specification, the dcmap field characterizes the need to establish a data channel. The 3GPP TS 26.114 specification specifies: multiple data channels may be mapped to a single data channel SDP media description, each with a corresponding "a=dcmap" SDP attribute and stream IDs that are unique within that media description.

Table 1 below shows an example SDP offer with data channel capability signaling in the specification.

**Table 1**

| **SDP offer** |
|---|
| m=application 52718 UDP/DTLS/SCTP webrtc-datachannel |
| b=AS:500 |
| a=max-message-size:1024 |
| a=sctp-port:5000 |
| a=setup:actpass |
| a=fingerpri nt:SHA-14A:AD:B9:B1:3F:82:18:3B:54:02:12:DF:3E:5D:49:6B:19:E5:7C:AB |
| a=tls-id: abe3de65cddef001be82 |
| a=dcmap:0 subprotocol="http" |

The specification specifies that the established data channel may be a Boottrap data channel, which may be understood as a data channel established between a terminal and a network side data server.

Table 2 below shows relevant provisions about bootstrap data channel content sources in the specification.

**Table 2**

| **Stream ID** | **Content Source** |
|---|---|
| 0 | Local network provider |
| 10 | Local user |
| 100 | Remote network provider |
| 110 | Remote user |

The specification specifies that the established data channel may be a non-boottrap data channel, which is a data channel directly established between terminals. Table 3 below shows an example SDP offer with data channel application streams in the specification.

**Table 3**

| **SDP offer** |
|---|
| m=application 52718 UDP/DTLS/SCTP webrtc-datachannel |
| b=AS:500 |
| a=max-message-size:1024 |
| a=sctp-port:5000 |
| a=setup:passive |
| a=fingerprint:SHA-1 4A:AD:B9:B1:3F:82:18:3B:54:02:12:DF:3E:5D:49:6B:19:E5:7C:AB |
| a=tls-id: abc3de65cddef001be82 |
| a=dcmap:10 subprotocol="http" |
| a=dcmap:38754 max-time=150;label="low latency" |
| a=dcmap:7216 max-retr=5;label="low loss" |
| a=3gpp-qos-hint:loss=0.01;latency=100 |

According to the 3GPP TS 26.114 specification, the terminal may establish a data channel with the network side data server. As shown by arrows 4 and 5 in FIG. 2, a terminal A and a terminal B may establish connection with the data server respectively, or may directly establish a data channel with a call peer (as indicated by arrow 6 in FIG. 2).

It should be noted that the first terminal is connected to a first data server proximal thereto, the second terminal may be also connected to a second data server proximal thereto, and the first data server may be connected to the second data server through a physical link, such as an optical fiber, instead of using air interface, so that the call quality of the first terminal and the second terminal can be ensured.

At operation 102, collecting in real time audio/video data.

Illustratively, the collected audio/video data includes, but is not limited to: audio data of a microphone, video data of a camera, text data of audio, and the like. The first terminal may provide a human-machine interaction interface (or UI). The collected content may be designated by a user through the human-machine interaction interface.

At operation 103, transmitting the collected audio/video data to the data server through the data channel. The data server generates, according to the audio/video data, first multimedia data to be transmitted to the second terminal. If the data server receives a data request from the second terminal, the data server may transmit the first multimedia data to the second terminal.

In some embodiments, the first multimedia data may be generated from the collected audio/video data. The first multimedia data includes, but is not limited to: a call recording, a call text, simultaneous interpretation data, a play of call video, a meme image, and the like.

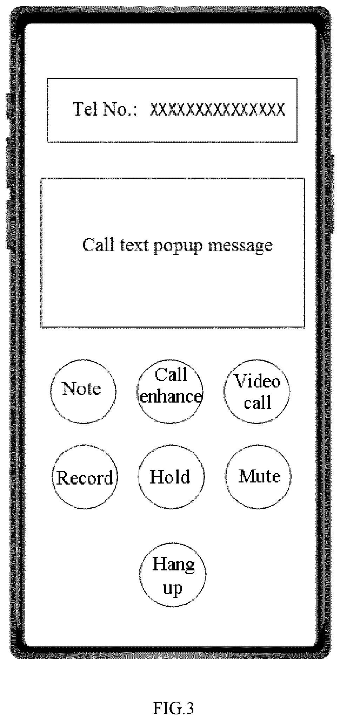

In some implementations, in the call process, the first terminal may also receive, through the data server, second multimedia execution data generated from audio/video data of the second terminal. The first terminal may provide a user interface which, as shown in FIG. 3, may be used for selections by a user on the provided user interface (UI). If the first terminal receives a first call enhancement instruction through the user interface (i.e., a first human-machine interaction interface), the process may proceed to operation 104. The first call enhancement instruction is an instruction that instructs the terminal to transmit data through the data server.

At operation 104, receiving second multimedia data from the data server through the data channel. The operation 104 may be executed concurrently with the operations 102 to 103, or may be executed before the operations 102 and 103, which is not limited in this embodiment.

In some implementations, the first terminal may acquire a multimedia data type through the first human-machine interaction interface; and before receiving the second multimedia data from the data server, the first terminal may request second multimedia data satisfying the multimedia data type from the data server.

In some implementations, the types of the second multimedia data include, but are not limited to: original audio data collected by the call peer (i.e., the second terminal), a call text uploaded by the call peer, a text converted by a server from the original audio data of the call peer, a text translated from simultaneous interpretation, original audio and video data collected by the call peer, and the like.

The first terminal may display data pushed by a network side data server on a call interface. Taking the "enhance call" service as an example, when a user clicks the "enhance call" button on a call interface, a call recording playing interface, a call text popup message or the like may be displayed on the call interface.

Illustratively, the first terminal collects audio data of a microphone in real time, and uploads the collected audio data to the network side data server through the data channel in real time. The network side data server may push the original audio data collected by the first terminal or multimedia data after enhancement process (or called expansion process), such as text or sign language video converted from the original audio data, or text or audio data of a foreign language translated from the original audio data, to the second terminal in real time. If the enhanced multimedia volume data is text, video or the like, the text, video or the like may be displayed on the call interface.

In this embodiment, the first terminal may push the audio/video data to the data server in response to the second terminal, so that the second terminal can acquire the original audio/video data or the enhanced audio/video data through the data server, and in the case of poor call quality, multimedia data may be transmitted through the data server, thereby ensuring the quality of the call audio/video data. In the call process, the second terminal may also acquire second multimedia data from the data server, so that the data call quality is improved when a voice call between two parties has poor quality. In addition, the user may select a multimedia data type, such as multimedia data of simultaneous interpretation, meme images, sign language videos, text and the like, to improve the call experience of the two parties.

Another embodiment of the present disclosure relates to a call method which is applied to a terminal. The terminal of this embodiment can acquire historical multimedia data from a data server even after a call is hung up.

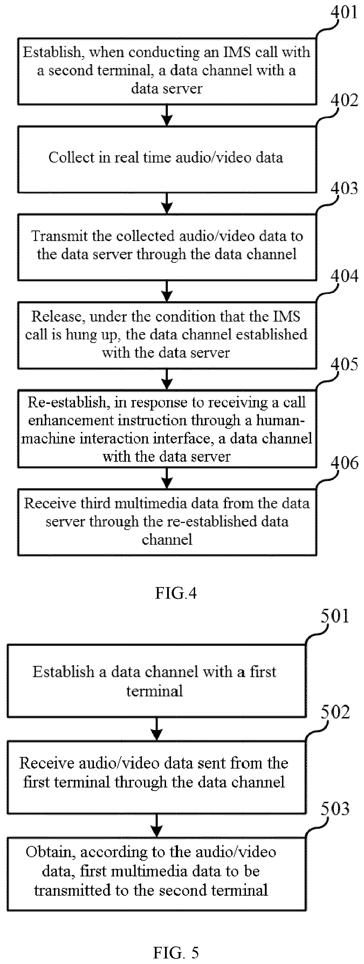

The implementation details of the call method according to this embodiment will be described in detail below, and the following description is provided merely for facilitating understanding of the implementation details, and is not necessary to implement the solution. FIG. 4 is a flowchart of the call method according to this embodiment, where the call method is implemented by a first terminal and includes the following operations 401 to 406.

At operation 401, establishing, when conducting an IMS call with a second terminal, a data channel with a data server.

At operation 402, collecting in real time audio/video data.

At operation 403, transmitting the collected audio/video data to the data server through the data channel. The data server obtains first multimedia data to be transmitted to the second terminal according to the audio/video data. After receiving a first multimedia data request from the second terminal, the data server may transmit the first multimedia data to the second terminal.

The operations 401 to 403 are substantially the same as the operations 101 to 103 described above, and thus are not repeated here.

At operation 404, releasing, in response to the IMS call being hung up, the data channel established with the data server.

In some implementations, the first terminal stops audio collection when the IMS call is hung up.

At operation 405, re-establishing, in response to receiving a second call enhancement instruction through a second human-machine interaction interface, the data channel with the data server.

In some implementations, the user selects a control (widget) indicating a call enhancement instruction through the second human-machine interaction interface (provided by the first terminal), and optionally a desired multimedia data type, for example, multimedia data of a call text type.

At operation 406, receiving third multimedia data from the data server through the re-established data channel. The third multimedia data is generated according to the audio/video data in the process of the IMS call (i.e., IMS call process).

In some implementations, the first terminal may send a third multimedia data request to the data server, and then receive third multimedia data pushed by the network side data server. The third multimedia data is generated according to the audio/video data in the IMS call process.

Types of the pushed third multimedia data may include call recordings of the second terminal, complete call recordings, call text, translated voice, call videos, or multimedia data obtained from voice at a caller side, such as the first multimedia data or the second multimedia data.

Compared with conventional solutions, this embodiment has the following beneficial effects: first, in this embodiment, the terminal uploads the collected audio data to the data server, and since the operator (telecom carrier) generally designates a data server closest to the terminal for use, the quality of the call audio data, such as low loss and low distortion, is guaranteed; and second, in this embodiment, the QoS of low loss, low latency, and the like is designated when the terminal establishes the data channel, thereby ensuring the transmission quality of the data channel; and further, the terminal in this embodiment can show in real time talk text of call peers and the like during the call, play in real time or playback call recording of the call peers after the call is ended, or show or browse in real time call text of the call peers, or perform simultaneous interpretation. In other words, this embodiment can solve the problems of low voice, discontinuity, no sound, noisy noise and the like in a call, thereby improving the call experience of the user.

Another embodiment of the present disclosure relates to a call method applied to a data server. The implementation details of the call method according to this embodiment will be described in detail below, and the following description is provided merely for facilitating understanding of the implementation details, and is not necessary to implement the solution. FIG. 5 is a flowchart of the call method according to this embodiment, where the call method includes the following operations 501 to 503.

At operation 501, establishing a data channel with a first terminal, wherein the first terminal is in an IMS call with a second terminal.

At operation 502, receiving audio/video data sent from the first terminal through the data channel.

In some implementations, after receiving the audio/video data from the first terminal, the server may store the audio/video data.

At operation 503, obtaining, according to the audio/video data, first multimedia data to be transmitted to the second terminal.

In some implementations, the first multimedia data to be transmitted to the second terminal may be original audio data, or enhanced audio data. Upon receiving a data request from the second terminal, the server may transmit the first multimedia data to the second terminal.

In some implementations, the type of the first multimedia data may be determined according to a selection by a user. For example, the terminal provides the user with a human-machine interaction interface, based on which the user selects a multimedia data type.

In some implementations, the established data channel may be released when the IMS call is hung up, and after receiving a second call enhancement instruction, the first terminal may re-establish a data channel with the first terminal, through which third multimedia data is transmitted to the first terminal. The third multimedia data is generated according to the audio/video data in the IMS call process.

Alternatively, the type of the third multimedia data may be acquired from a request from the first terminal.

In the case of poor call quality, the server of this embodiment can transmit the audio/video data or the enhanced audio/video data between the first terminal and the second terminal to improve the call quality, and can further transmit data during historical calls after the call is completed, thereby further improving the user experience.

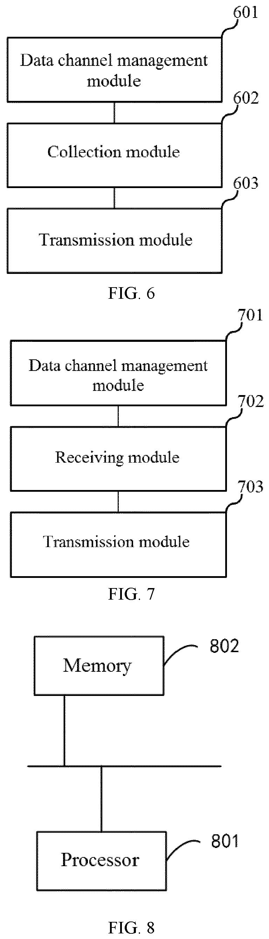

Another embodiment of the present disclosure relates to a call device which is applicable to (or included in) a terminal. The details of the call device according to this embodiment will be described in detail below. The following description is provided merely for facilitating understanding of the implementation details and is not necessary for implementing the present embodiment. FIG. 6 is a schematic diagram of the call device according to this embodiment, which includes: a data channel management module 601 configured to establish, when conducting an IMS call with a second terminal, a data channel with a data server; a collection module 602 configured to collect in real time audio/video data; and a transmission module 603 configured to transmit the collected audio/video data to the data server through the data channel, so that the data server obtains first multimedia data according to the audio/video data and transmits the first multimedia data to the second terminal.

In some implementations, the call device further includes a receiving module configured to provide a human-machine interaction interface; and receive, in response to receiving a first call enhancement instruction through a first human-machine interaction interface, second multimedia data from the data server through the data channel. The second multimedia data is generated according to the audio/video data from the second terminal.

In some implementations, the data channel management module 601 in the call device is further configured to release, in response to the IMS call being hung up, the data channel established with the data server, and provide a human-machine interaction interface; and re-establish, in response to receiving a second call enhancement instruction through a second human-machine interaction interface, the data channel with the data server; and the receiving module is further configured to receive third multimedia data from the data server through the re-established data channel. The third multimedia data is generated according to the audio/video data in the IMS call process.

In some implementations, the transmission module 603 is further configured to acquire a multimedia data type through the human-machine interaction interface; and request second multimedia data satisfying the multimedia data type from the data server.

In some implementations, the data channel management module 601 is further configured to monitor an instruction sent from the second terminal; detect, according to the instruction, whether to establish the data channel; and proceed, under the condition that the instruction indicates to establish the data channel, to the operation of establishing the data channel with the data server.

In some implementations, the data channel management module 601 is further configured to monitor session initiation protocol (SIP) signaling sent from the second terminal; and determine whether to establish the data channel according to a dcmap field carried in the SIP signaling.

Another embodiment of the present disclosure relates to a call device which is applicable to (or included in) a server. The details of the call device according to this embodiment will be described in detail below. The following description is provided merely for facilitating understanding of the implementation details and is not necessary for implementing the present embodiment. FIG. 7 is a schematic diagram of the call device according to this embodiment, which includes: a data channel management module 701 configured to establish a data channel with a first terminal, where the first terminal is in an IMS call with a second terminal; a receiving module 702 configured to receive audio/video data sent from the first terminal through the data channel; and a transmission module 703 configured to obtain, according to the audio/video data, first multimedia data to be transmitted to the second terminal, and transmit the first multimedia data.

In some implementations, the transmission module 703 is further configured to send, upon receiving a second multimedia data request from the first terminal, the second multimedia data to the first terminal through the data channel, where the second multimedia data is generated according to the audio/video data from the second terminal.

In some implementations, the data channel management module 701 is further configured to release, in response to the IMS call being hung up, the data channel established with the first terminal; and re-establish a data channel with the first terminal in response to a data request from the first terminal, and send third multimedia data to the first terminal through the re-established data channel. The third multimedia data is generated according to the audio/video data in the IMS call process.

In some implementations, the receiving module 702 is further configured to send, in response to a request from the first terminal, second multimedia data satisfying a second multimedia data type to the first terminal.

It is obvious that this embodiment is a system embodiment corresponding to the above method embodiment, and this embodiment may be implemented in cooperation with the above method embodiment. The related technical details and technical effects mentioned in the above embodiment are still valid in this embodiment, and thus are not repeated here to avoid redundancy. Accordingly, the related technical details mentioned in this embodiment are also applicable to the foregoing embodiment.

It should be noted that all modules referred to in this embodiment are logic modules, and in practical applications, one logic unit may be one physical unit, or a part of one physical unit, or may be implemented by a combination of multiple physical units. In addition, in order to highlight the innovative part of the present disclosure, units which are not so closely related to solving the technical problem proposed by the present disclosure are not introduced in the embodiment, but this does not indicate that no other unit is present in the embodiment.

Another embodiment of the present disclosure relates to a call system. As shown in FIG. 2, the call system includes: a first terminal (i.e., terminal A in FIG. 2), a second terminal (i.e., terminal B in FIG. 2), and a data server. The first terminal is communicatively connected with the data server, and the data server is communicatively connected with the second terminal. The first terminal is configured to establish, when conducting an IMS call with the second terminal, a data channel with the data server, and collect in real time audio/video data, and transmit the collected audio/video data to the data server through the data channel; the data server is configured to generate, according to the audio/video data, first multimedia data, and transmit the first multimedia data to the second terminal; and the second terminal is configured to receive the first multimedia data.

Another embodiment of the present disclosure relates to an electronic device which, as shown in FIG. 8, includes: at least one processor 801; and a memory 802 communicatively connected with the at least one processor 801. The memory 802 stores instructions executable by the at least one processor 801, and the instructions, when executed by the at least one processor 801, cause the at least one processor 801 to implement the call method according to any one of the above embodiments.

The memory and the processor are connected via a bus. The bus may include any number of interconnected buses and bridges, and the bus connects various circuits of the one or more processors and the memory together. The bus may also connect various other circuits such as peripherals, voltage regulators, power management circuits, and the like, which are well known in the art and, therefore, will not be described in further details herein. A bus interface provides an interface between the bus and a transceiver. The transceiver may include one or more elements, such as a plurality of receivers and transmitters, to provide a unit for communicating with various other apparatuses over a transmission medium. Data processed by the processor is transmitted over a wireless medium through an antenna which further receives data and transmits the data to the processor.

The processor is responsible for managing the bus and general processing, and may further provide various functions including timing, peripheral interfaces, voltage regulation, power management, and other control functions. The memory may be configured to store data used by the processor during operation.

Another embodiment of the present disclosure relates to a computer-readable storage medium with a computer program stored thereon. The computer program is executed by a processor to implement any of the above method embodiments.

That is, as can be understood by those skilled in the art, all or part of the operations in any of the method embodiments described above may be implemented by a program instructing related hardware, where the program is stored in a storage medium and includes several instructions to enable a device (which may be a micro controller unit, a chip, or the like) or a processor to perform all or part of the operations in the method described in any of the above embodiments of the present application. The storage medium mentioned before includes: a U disk, a mobile hard disk, a read-only memory (ROM), a random access memory (RAM), a magnetic or optical disk, or any other medium that can store program codes.

It will be understood by those of ordinary skill in the art that the foregoing implementations are specific embodiments of the present disclosure, and that, in practical applications, various changes in form and details may be made therein without departing from the scope of the present disclosure as defined in the appended claims.

## Claims

1. A call method applied to a first terminal, the call method comprising:
establishing (101, 401), when conducting an IP multimedia subsystem, IMS call with a second terminal, a data channel with a data server;
collecting (102, 402) in real time audio/video data; and
transmitting (103, 403) the collected audio/video data to the data server through the data channel,
wherein after establishing the data channel with the data server, the call method further comprises:
providing a first human-machine interaction,
the method being **characterised in that** it comprises:
requesting, in response to receiving a first call enhancement instruction triggered by a user of the first terminal through the first human-machine interaction interface provided by the first terminal, second multimedia data satisfying a multimedia data type from the data server; wherein the multimedia data type is selected by the user through the first human-machine interaction interface; and
receiving (104) the second multimedia data from the data server through the data channel, wherein the second multimedia data is generated according to audio/video data from the second terminal.

2. The call method according to claim 1, wherein after establishing the data channel with the data server, the call method further comprises:
releasing (404), in response to the IMS call being hung up, the data channel established with the data server;
re-establishing (405), in response to receiving a second call enhancement instruction through a second human-machine interaction interface provided by the first terminal, the data channel with the data server; and
receiving (406) third multimedia data from the data server through the re-established data channel; wherein the third multimedia data is generated according to the audio/video data in a process of the IMS call.

3. The call method according to claim 1 or 2, wherein before establishing the data channel with the data server, the call method further comprises:
monitoring an instruction sent from the second terminal;
determining, according to the instruction, whether to establish the data channel; and
proceeding, under a condition that the instruction indicates to establish the data channel, the operation of establishing the data channel with the data server.

4. The call method according to claim 3, wherein monitoring the instruction sent from the second terminal comprises:
monitoring session initiation protocol, SIP signaling sent from the second terminal; and
wherein determining, according to the instruction, whether to establish the data channel comprises:
determining whether to establish the data channel according to a dcmap field carried in the SIP signaling.

5. The call method according to any one of claims 1 to 4, wherein the collected audio/video data comprises at least one selected from a group consisting of: audio data of a microphone, video data of a camera, or text data of audio.

6. The call method according to claim 1, wherein the second multimedia data comprises at least one selected from a group consisting of: original audio data collected by the second terminal, a call text uploaded by the second terminal, a text converted by the data server from an original audio data of the second terminal, a text translated from simultaneous interpretation, or original audio and video data collected by the second terminal.

7. A call method applied to a data server, the call method comprising:
establishing (501) a data channel with a first terminal, wherein the first terminal is in an IMS call with a second terminal;
receiving (502) audio/video data sent from the first terminal through the data channel; and
generating (503), according to the audio/video data, first multimedia data, and transmitting the first multimedia data to the second terminal;
**characterised in that**
after establishing the data channel with the first terminal, the call method further comprises:
generating, in response to receiving a request from the first terminal for a second multimedia data satisfying a multimedia data type, the second multimedia data based on the audio and video data of the second terminal, and sending the second multimedia data to the first terminal.

8. The call method according to claim 7, wherein the first multimedia data comprises at least one selected from a group consisting of: a call recording, a call text, simultaneous interpretation data, a play of call video, or a meme image.

9. The call method according to claim 7, wherein the second multimedia data comprises at least one selected from a group consisting of: original audio data collected by the second terminal, a call text uploaded by the second terminal, a text converted by the data server from an original audio data of the second terminal, a text translated from simultaneous interpretation, or original audio and video data collected by the second terminal.

10. A call system, comprising: a first terminal, a second terminal and a data server, wherein the first terminal is communicatively connected with the data server, and the data server is communicatively connected with the second terminal;
the first terminal is configured to establish, when conducting an IMS call with the second terminal, a data channel with the data server, and collect in real time audio/video data, and transmit the collected audio/video data to the data server through the data channel;
the data server is configured to generate, according to the audio/video data, first multimedia data, and transmit the first multimedia data to the second terminal; and
the second terminal is configured to receive the first multimedia data,
the call system being **characterised in that**
the first terminal is further configured to:
request, in response to receiving a first call enhancement instruction through a first human-machine interaction interface provided by the first terminal, second multimedia data satisfying a multimedia data type from the data server; wherein the multimedia data type is acquired through the first human-machine interaction interface, and
receive the second multimedia data from the data server through the data channel; and
wherein the data server is further configured to generate, in response to receiving the request from the first terminal for the second multimedia data, the second multimedia data according to audio/video data from the second terminal, and send the second multimedia data to the first terminal.

11. The call method according to claim 10, wherein the first multimedia data comprises at least one selected from a group consisting of: a call recording, a call text, simultaneous interpretation data, a play of call video, or a meme image.

12. The call method according to claim 10, wherein the second multimedia data comprises at least one selected from a group consisting of: original audio data collected by the second terminal, a call text uploaded by the second terminal, a text converted by the data server from an original audio data of the second terminal, a text translated from simultaneous interpretation, or original audio and video data collected by the second terminal.

13. An electronic device, comprising:
at least one processor; and
a memory communicatively connected with the at least one processor; wherein
the memory stores instructions executable by the at least one processor, and the instructions, when executed by the at least one processor, cause the at least one processor to implement the call method according to any one of claims 1 to 6, or the call method according to any one of claims 7 to 9.

14. A computer-readable storage medium having a computer program stored thereon which, when executed by a processor, causes the call method according to any one of claims 1 to 6, or the call method according to any one of claims 7 to 9 to be implemented.

## Patentansprüche

1. Anrufverfahren, das in einem ersten Endgerät angewandt wird, wobei das Anrufverfahren umfasst:
Einrichten (101, 401), wenn ein Anruf eines IP-Multimedia-Subsystems, IMS-Anruf, mit einem zweiten Endgerät durchgeführt wird, eines Datenkanals mit einem Datenserver;
Sammeln (102, 402) von Audio-/Videodaten in Echtzeit; und
Übertragen (103, 403) der gesammelten Audio-/Videodaten über den Datenkanal zu dem Datenserver,
wobei das Anrufverfahren nach dem Einrichten des Datenkanals mit dem Datenserver ferner umfasst:
Bereitstellen einer ersten Mensch-Maschine-Interaktion, wobei das Verfahren **dadurch gekennzeichnet ist, dass** es umfasst:
Anfordern, als Reaktion auf ein Empfangen einer ersten Anrufverbesserungsanweisung, die von einem Benutzer des ersten Endgeräts über die erste Mensch-Maschine-Interaktionsschnittstelle ausgelöst wird, die von dem ersten Endgerät bereitgestellt wird, von zweiten Multimediadaten, die einen Multimediadatentyp erfüllen, von dem Datenserver; wobei der Multimediadatentyp von dem Benutzer über die erste Mensch-Maschine-Interaktionsschnittstelle ausgewählt wird; und
Empfangen (104) der zweiten Multimediadaten von dem Datenserver über den Datenkanal, wobei die zweiten Multimediadaten gemäß den Audio-/Videodaten von dem zweiten Endgerät erzeugt werden.

2. Anrufverfahren nach Anspruch 1, wobei das Anrufverfahren nach dem Einrichten des Datenkanals mit dem Datenserver ferner umfasst:
Freigeben (404) des mit dem Datenserver eingerichteten Datenkanals als Reaktion darauf, dass der IMS-Anruf aufgelegt wurde;
erneutes Einrichten (405), als Reaktion auf ein Empfangen einer zweiten Anrufverbesserungsanweisung über eine zweite Mensch-Maschine-Interaktionsschnittstelle, die von dem ersten Endgerät bereitgestellt wird, des Datenkanals mit dem Datenserver; und
Empfangen (406) von dritten Multimediadaten von dem Datenserver über den erneut eingerichteten Datenkanal;
wobei die dritten Multimediadaten gemäß den Audio-/Videodaten in einem Prozess des IMS-Anrufs erzeugt werden.

3. Anrufverfahren nach Anspruch 1 oder 2, wobei das Anrufverfahren vor dem Einrichten des Datenkanals mit dem Datenserver ferner umfasst:
Überwachen einer Anweisung, die von dem zweiten Endgerät gesendet wird;
Ermitteln, gemäß der Anweisung, ob der Datenkanal eingerichtet werden soll; und
Fortsetzen, unter einer Bedingung, dass die Anweisung anzeigt, dass der Datenkanal eingerichtet werden soll, der Operation des Einrichtens des Datenkanals mit dem Datenserver.

4. Anrufverfahren nach Anspruch 3, wobei das Überwachen der Anweisung, die von dem zweiten Endgerät gesendet wird, umfasst:
Überwachen einer Signalisierung eines Sitzungseröffnungsprotokolls, SIP-Signalisierung, die von dem zweiten Endgerät gesendet wird; und
wobei das Ermitteln gemäß der Anweisung, ob der Datenkanal eingerichtet werden soll, umfasst:
Ermitteln, ob der Datenkanal gemäß einem DCMAP-Feld, das in der SIP-Signalisierung transportiert wird, eingerichtet werden soll.

5. Anrufverfahren nach einem der Ansprüche 1 bis 4, wobei die gesammelten Audio-/Videodaten mindestens eines umfassen, das aus einer Gruppe ausgewählt wird, die besteht aus: Audiodaten von einem Mikrofon, Videodaten von einer Kamera oder Textdaten von einem Audio.

6. Anrufverfahren nach Anspruch 1, wobei die zweiten Multimediadaten mindestens eines umfassen, das aus einer Gruppe ausgewählt wird, die besteht aus: Original-Audiodaten, die von dem zweiten Endgerät gesammelt werden, einem Anruftext, der von dem zweiten Endgerät hochgeladen wird, einem Text, der durch den Datenserver aus Original-Audiodaten des zweiten Endgeräts umgewandelt wird, einem Text, der in einer Simultanübersetzung übersetzt wird, oder Original-Audio- und Videodaten, die von dem zweiten Endgerät gesammelt werden.

7. Anrufverfahren, das in einem Datenserver angewandt wird, wobei das Anrufverfahren umfasst:
Einrichten (501) eines Datenkanals mit einem ersten Endgerät, wobei sich das erste Endgerät in einem IMS-Anruf mit einem zweiten Endgerät befindet;
Empfangen (502) von Audio-/Videodaten, die von dem ersten Endgerät über den Datenkanal gesendet werden; und
Erzeugen (503), gemäß den Audio-/Videodaten, von ersten Multimediadaten und Übertragen der ersten Multimediadaten zu dem zweiten Endgerät;
**dadurch gekennzeichnet, dass**
das Anrufverfahren nach dem Einrichten des Datenkanals mit dem ersten Endgerät ferner umfasst:
Erzeugen, als Reaktion auf das Empfangen einer Anforderung von dem ersten Endgerät für zweite Multimediadaten, die einen Multimediadatentyp erfüllen, der zweiten Multimediadaten basierend auf den Audio- und Videodaten des zweiten Endgeräts und Senden der zweiten Multimediadaten an das erste Endgerät.

8. Anrufverfahren nach Anspruch 7, wobei die ersten Multimediadaten mindestens eines umfassen, das aus einer Gruppe ausgewählt wird, die besteht aus: einer Anrufaufzeichnung, einem Anruftext, Simultanübersetzungsdaten, einer Wiedergabe eines Anrufvideos oder einem Meme-Bild.

9. Anrufverfahren nach Anspruch 7, wobei die zweiten Multimediadaten mindestens eines umfassen, das aus einer Gruppe ausgewählt wird, die besteht aus: Original-Audiodaten, die von dem zweiten Endgerät gesammelt werden, einem Anruftext, der von dem zweiten Endgerät hochgeladen wird, einem Text, der durch den Datenserver aus Original-Audiodaten des zweiten Endgeräts umgewandelt wird, einem Text, der in einer Simultanübersetzung übersetzt wird, oder Original-Audio- und Videodaten, die von dem zweiten Endgerät gesammelt werden.

10. Anrufsystem, das umfasst: ein erstes Endgerät, ein zweites Endgerät und einen Datenserver, wobei das erste Endgerät kommunikativ mit dem Datenserver verbunden ist und wobei der Datenserver kommunikativ mit dem zweiten Endgerät verbunden ist;
wobei das erste Endgerät konfiguriert ist, um, wenn ein IMS-Anruf mit dem zweiten Endgerät ausgeführt wird, einen Datenkanal mit dem Datenserver einzurichten und Audio-/Videodaten in Echtzeit zu sammeln und um die gesammelten Audio-/Videodaten über den Datenkanal zu dem Datenserver zu übertragen;
wobei der Datenserver konfiguriert ist, um erste Multimediadaten gemäß den Audio-/Videodaten zu erzeugen und um die ersten Multimediadaten zu dem zweiten Endgerät zu übertragen; und
wobei das zweite Endgerät konfiguriert ist, um die ersten Multimediadaten zu empfangen,
wobei das Anrufsystem **dadurch gekennzeichnet ist, dass** das erste Endgerät ferner konfiguriert ist zum:
Anfordern, als Reaktion auf ein Empfangen einer ersten Anrufverbesserungsanweisung über eine erste Mensch-Maschine-Interaktionsschnittstelle, die von dem ersten Endgerät bereitgestellt wird, von zweiten Multimediadaten, die einen Multimediadatentyp erfüllen, von dem Datenserver; wobei der Multimediadatentyp durch die erste Mensch-Maschine-Interaktionsschnittstelle erlangt wird, und
Empfangen der zweiten Multimediadaten von dem Datenserver über den Datenkanal; und
wobei der Datenserver ferner konfiguriert ist, um, als Reaktion auf ein Empfangen der Anforderung von dem ersten Endgerät für die zweiten Multimediadaten, die zweiten Multimediadaten gemäß Audio/Videodaten von dem zweiten Endgerät zu erzeugen und um die zweiten Multimediadaten an das erste Endgerät zu senden.

11. Anrufverfahren nach Anspruch 10, wobei die ersten Multimediadaten mindestens eines umfassen, das aus einer Gruppe ausgewählt wird, die besteht aus: einer Anrufaufzeichnung, einem Anruftext, Simultanübersetzungsdaten, einer Wiedergabe eines Anrufvideos oder einem Meme-Bild.

12. Anrufverfahren nach Anspruch 10, wobei die zweiten Multimediadaten mindestens eines umfassen, das aus einer Gruppe ausgewählt wird, die besteht aus: Original-Audiodaten, die von dem zweiten Endgerät gesammelt werden, einem Anruftext, der von dem zweiten Endgerät hochgeladen wird, einem Text, der durch den Datenserver aus Original-Audiodaten des zweiten Endgeräts umgewandelt wird, einem Text, der in einer Simultanübersetzung übersetzt wird, oder Original-Audio- und Videodaten, die von dem zweiten Endgerät gesammelt werden.

13. Elektronische Vorrichtung, umfassend:
mindestens einen Prozessor; und
einen Speicher, der kommunikativ mit dem mindestens einen Prozessor verbunden ist; wobei in dem Speicher Anweisungen gespeichert sind, die durch den mindestens einen Prozessor ausführbar sind, und wobei die Anweisungen, wenn sie von dem mindestens einen Prozessor ausgeführt werden, den mindestens einen Prozessor veranlassen, das Anrufverfahren nach einem der Ansprüche 1 bis 6 oder das Anrufverfahren nach einem der Ansprüche 7 bis 9 zu implementieren.

14. Computerlesbares Speichermedium, in dem ein Computerprogramm gespeichert ist, das, wenn es von einem Prozessor ausgeführt wird, veranlasst, dass das Anrufverfahren nach einem der Ansprüche 1 bis 6 oder das Anrufverfahren nach einem der Ansprüche 7 bis 9 implementiert wird.

## Revendications

1. Procédé d'appel appliqué à un premier terminal, le procédé d'appel comprenant :
l'établissement (101, 401), lors de l'exécution d'un appel de sous-système multimédia IP, IMS, avec un second terminal, d'un canal de données avec un serveur de données ;
la collecte (102, 402) en temps réel de données audio/vidéo ; et
la transmission (103, 403) des données audio/vidéo collectées au serveur de données par l'intermédiaire du canal de données,
le procédé d'appel comprenant en outre, après l'établissement du canal de données avec le serveur de données :
la fourniture d'une première interaction homme-machine, le procédé étant **caractérisé en ce qu'**il comprend :
le fait de demander au serveur de données, en réponse à la réception d'une première instruction d'amélioration d'appel déclenchée par un utilisateur du premier terminal par l'intermédiaire de la première interface d'interaction homme-machine fournie par le premier terminal, des deuxièmes données multimédia satisfaisant à un type de données multimédia ; le type de données multimédia étant sélectionné par l'utilisateur par l'intermédiaire de la première interface d'interaction homme-machine ; et
la réception (104) des deuxièmes données multimédia en provenance du serveur de données par l'intermédiaire du canal de données, les deuxièmes données multimédia étant générées en fonction de données audio/vidéo provenant du second terminal.

2. Procédé d'appel selon la revendication 1, le procédé d'appel comprenant en outre, après l'établissement du canal de données avec le serveur de données :
la libération (404), en réponse au raccrochage de l'appel IMS, du canal de données établi avec le serveur de données ;
le rétablissement (405), en réponse à la réception d'une seconde instruction d'amélioration d'appel via une seconde interface d'interaction homme-machine fournie par le premier terminal, du canal de données avec le serveur de données ; et
la réception (406) de troisièmes données multimédia du serveur de données par l'intermédiaire du canal de données rétabli ; les troisièmes données multimédia étant générées en fonction des données audio/vidéo dans un processus de l'appel IMS.

3. Procédé d'appel selon la revendication 1 ou 2, le procédé d'appel comprenant en outre, avant l'établissement du canal de données avec le serveur de données :
la surveillance d'une instruction émise depuis le second terminal ;
le fait de déterminer, d'après l'instruction, s'il convient d'établir le canal de données ; et
le fait de passer, à condition que l'instruction indique qu'il convient d'établir le canal de données, à l'opération d'établissement du canal de données avec le serveur de données.

4. Procédé d'appel selon la revendication 3, la surveillance de l'instruction émise depuis le second terminal comprenant :
la surveillance d'une signalisation de protocole d'ouverture de session, SIP, émise depuis le second terminal ; et
le fait de déterminer, d'après l'instruction, s'il convient d'établir le canal de données comprenant :
le fait de déterminer s'il convient d'établir le canal de données en fonction d'un champ dcmap transporté dans la signalisation SIP.

5. Procédé d'appel selon l'une quelconque des revendications 1 à 4, les données audio/vidéo collectées comprenant au moins une donnée sélectionnée dans un groupe constitué par : des données audio d'un microphone, des données vidéo d'une caméra, ou des données textuelles d'audio.

6. Procédé d'appel selon la revendication 1, les deuxièmes données multimédia comprenant au moins une donnée sélectionnée dans un groupe constitué par : des données audio originales collectées par le second terminal, un texte d'appel téléchargé par le second terminal, un texte converti par le serveur de données à partir d'une donnée audio originale du second terminal, un texte traduit à partir d'une interprétation simultanée, ou des données audio et vidéo originales collectées par le second terminal.

7. Procédé d'appel appliqué à un serveur de données, le procédé d'appel comprenant :
l'établissement (501) d'un canal de données avec un premier terminal, le premier terminal étant en appel IMS avec un second terminal ;
la réception (502) de données audio/vidéo émises depuis le premier terminal par l'intermédiaire du canal de données ; et
la génération (503), en fonction des données audio/vidéo, de premières données multimédia, et la transmission des premières données multimédia au second terminal ;
**caractérisé en ce que**
le procédé d'appel comprend en outre, après l'établissement du canal de données avec le premier terminal :
la génération, en réponse à la réception d'une demande provenant du premier terminal portant sur des deuxièmes données multimédia satisfaisant à un type de données multimédia, des deuxièmes données multimédia d'après les données audio et vidéo du second terminal, et l'envoi des deuxièmes données multimédia au premier terminal.

8. Procédé d'appel selon la revendication 7, les premières données multimédia comprenant au moins une donnée sélectionnée dans un groupe constitué par : un enregistrement d'appel, un texte d'appel, des données d'interprétation simultanée, une lecture d'une vidéo d'appel, ou une image de mème.

9. Procédé d'appel selon la revendication 7, les deuxièmes données multimédia comprenant au moins une donnée sélectionnée dans un groupe constitué par : des données audio originales collectées par le second terminal, un texte d'appel téléchargé par le second terminal, un texte converti par le serveur de données à partir d'une donnée audio originale du second terminal, un texte traduit à partir d'une interprétation simultanée, ou des données audio et vidéo originales collectées par le second terminal.

10. Système d'appel, comprenant : un premier terminal, un second terminal et un serveur de données, le premier terminal étant connecté en communication avec le serveur de données, et le serveur de données étant connecté en communication avec le second terminal ;
le premier terminal étant configuré pour établir, lors de l'exécution d'un appel IMS avec le second terminal, un canal de données avec le serveur de données, et collecter en temps réel des données audio/vidéo, et transmettre les données audio/vidéo collectées au serveur de données par l'intermédiaire du canal de données ;
le serveur de données étant configuré pour générer, en fonction des données audio/vidéo, des premières données multimédia, et transmettre les premières données multimédia au second terminal ; et
le second terminal étant configuré pour recevoir les premières données multimédia,
le système d'appel étant **caractérisé en ce que** le premier terminal est en outre configuré pour :
demander au serveur de données, en réponse à la réception d'une première instruction d'amélioration d'appel par l'intermédiaire d'une première interface d'interaction homme-machine fournie par le premier terminal, des deuxièmes données multimédia satisfaisant à un type de données multimédia ; le type de données multimédia étant acquis par l'intermédiaire de la première interface d'interaction homme-machine, et
recevoir les deuxièmes données multimédia en provenance du serveur de données par l'intermédiaire du canal de données ; et
le serveur de données étant en outre configuré pour générer, en réponse à la réception de la demande provenant du premier terminal portant sur les deuxièmes données multimédia, les deuxièmes données multimédia en fonction de données audio/vidéo provenant du second terminal, et envoyer les deuxièmes données multimédia au premier terminal.

11. Procédé d'appel selon la revendication 10, les premières données multimédia comprenant au moins une donnée sélectionnée dans un groupe constitué par : un enregistrement d'appel, un texte d'appel, des données d'interprétation simultanée, une lecture d'une vidéo d'appel, ou une image de mème.

12. Procédé d'appel selon la revendication 10, les deuxièmes données multimédia comprenant au moins une donnée sélectionnée dans un groupe constitué par : des données audio originales collectées par le second terminal, un texte d'appel téléchargé par le second terminal, un texte converti par le serveur de données à partir d'une donnée audio originale du second terminal, un texte traduit à partir d'une interprétation simultanée, ou des données audio et vidéo originales collectées par le second terminal.

13. Dispositif électronique, comprenant :
au moins un processeur ; et
une mémoire connectée en communication avec le ou les processeurs ; la mémoire conservant des instructions exécutables par le ou les processeurs, et les instructions, lorsqu'elles sont exécutées par le ou les processeurs, amenant le ou les processeurs à mettre en œuvre le procédé d'appel selon l'une quelconque des revendications 1 à 6, ou le procédé d'appel selon l'une quelconque des revendications 7 à 9.

14. Support de stockage lisible par ordinateur sur lequel est stocké un programme informatique qui, lorsqu'il est exécuté par un processeur, provoque la mise en œuvre du procédé d'appel selon l'une quelconque des revendications 1 à 6 ou du procédé d'appel selon l'une quelconque des revendications 7 à 9.
